# EUROPEAN PATENT SPECIFICATION

(11) **EP 4 258 212 B1**
(45) Date of publication and mention of the grant of the patent: **10.06.2026**
(21) Application number: 22166600.1
(22) Date of filing: 04.04.2022
(51) Int. Cl.: G06T 7/73

(54) **COMPUTER-IMPLEMENTED METHOD FOR PROCESSING AND ANALYSING VEHICLE CRASH-TEST DATA, SYSTEM AND COMPUTER PROGRAM FOR PERFORMING THAT METHOD**
COMPUTERIMPLEMENTIERTES VERFAHREN ZUR VERARBEITUNG UND ANALYSE VON FAHRZEUG-CRASHTESTDATEN, SYSTEM UND COMPUTERPROGRAMM ZUR DURCHFÜHRUNG DIESES VERFAHRENS
PROCÉDÉ MIS EN OEUVRE PAR ORDINATEUR POUR LE TRAITEMENT ET L'ANALYSE DE DONNÉES DE CRASH-TEST DE VÉHICULE; SYSTÈME ET PROGRAMME INFORMATIQUE PERMETTANT DE METTRE EN OEUVRE CE PROCÉDÉ

(43) Date of publication of application: 11.10.2023
(73) Proprietor: VOLKSWAGEN AG, 38440 Wolfsburg (DE)
(72) Inventor: CESUR, Gülce, 81675 München (DE); HILBERT, Marc, Dr., 80801 München (DE); KLESHCHONOK, Andrii, Dr., 80809 München (DE); DZERIN, Yuri, 81373 München (DE)

(56) References cited:
- CN-A- 110 766 677
- US-B2- 11 004 202
- MICHAEL E FARMER ET AL: "Smart Automotive Airbags: Occupant Classification and Tracking", IEEE TRANSACTIONS ON VEHICULAR TECHNOLOGY, IEEE, USA, vol. 56, no. 1, 1 January 2007 (2007-01-01), pages 60 - 80, XP011157635, ISSN: 0018-9545, DOI: 10.1109/TVT.2006.883768
- FRANCIS ENGELMANN ET AL: "Know What Your Neighbors Do: 3D Semantic Segmentation of Point Clouds", ARXIV.ORG, CORNELL UNIVERSITY LIBRARY, 201 OLIN LIBRARY CORNELL UNIVERSITY ITHACA, NY 14853, 2 October 2018 (2018-10-02), XP081568855, DOI: 10.1007/978-3-030-11015-4_29

## Description

The present invention regards a computer-implemented method for automatically processing and analysing vehicle crash-test data using a machine learning model, a data processing system having a processor configured to perform the computer-implemented method and a computer program comprising program instructions which, when being executed by a processor, cause the processor to carry out the computer-implemented method.

For improving the safety of vehicles in crash situations automotive crash tests under controlled conditions are carried out, wherein the performance of the respective vehicle under crash conditions is tested and examined. In many cases, dummies are used in crash tests to simulate a human's behaviour and the effects of the impact on the human body, especially the effects of safety mechanisms like airbag inflation on the human body. However, also the behaviour of certain parts of the vehicle like the airbag, greenhouse, doors etc. are examined regardless of the usage of dummies. In general, a set of high-speed cameras is used, wherein the cameras record images of the course of a vehicle crash over time from different angles to receive different perspectives of the impact event. That procedure allows to combine the recorded two-dimensional (2D) images and to reconstruct a three-dimensional (3D) object for each respective time step. For example, a 3D point cloud can be reconstructed, wherein each point or data point of the 3D point cloud has three coordinates and an assigned intensity or colour value.

After recording a sequence of images during a crash-test an analysis and an estimation of the key performance indicators (KPI) like maximum inflation of the airbag, maximum deformation, velocity of airbag inflation, position of airbag during inflation and its relation to other vehicle components as the steering wheel etc. have to be performed. One of the most crucial aspects of that analysis is to identify the performance of the airbag regarding its function to protect a dummy's body during the impact event, e.g. by analysing the inflation of the airbag into the vehicle interior and the distance of the airbag to different parts of the dummy's body. Typically, the crash-test data is analysed manually frame by frame or from time step to time step, respectively, typically using a mesh model for visualizing the data points of a 3D point cloud and calculating the relevant KPIs. Moreover, simulations like finite element method (FEM) numerical simulations are performed based on the mesh model, whose results are compared with the recorded experimental crash-test data. However, the number of frames or time steps during one crash test can easily reach 10,000 with up to a million data points recorded. Thus, a manual analysis as described above takes a considerable amount of time and, thus, leading to high costs, e.g. working costs for engineers performing that analysis.

According to the prior art there are concepts of improving the analysis of crash-test data using e.g. artificial intelligence. For example, the US patent application US 2021/0158625 A1 discloses a system and method incorporating extended reality, augmented reality, virtual reality, and artificial intelligence for providing solutions to both the need for real-time medical diagnosis as well as improved crash testing. Through the utilization of real-time 3D imaging, extended reality data, augmented reality data, and artificial intelligence, an actual real-time emergency or non-emergency medical response to an impact event provides immediate diagnostic information through predictive analytics from collective data to emergency medical services and hospital medical personnel. Furthermore, an improved approach to vehicle impact testing is provided.

The Chinese patent application CN 110 766677 A discloses a machine vision-based automatic detection method for parameters and anomalies in an airbag ignition process, which performs an airbag segmentation of images recorded during a vehicle crash-test in order to extract the development of the airbag volume over time.

The article "Smart Automotive airbags: Occupant Classification and Tracking" in the IEEE Transactions on vehicular technology journal, vol. 56, No. 1, January 2007 by Michael E. Farmer and Anil K. Jain describes an integrated real-time vision-based occupant classification and tracking system using a single grayscale camera with commercially available processing hardware.

US 11 004 202 B2 regards systems and methods for obtaining 3D point-level segmentation of 3D point clouds. One embodiment includes at least one processor and a memory containing a segmentation pipeline application which configures the at least one processor to pre-process a 3D point cloud to group 3D points, provide the groups of 3D points to a 3D neural network to generate initial label predictions for the groups of 3D points, interpolate label predictions for individual 3D points based upon initial label predictions for at least two neighbouring groups of 3D points including the group of 3D points to which a given individual 3D point belongs, refine the label predictions using a graph neural network and output a segmented 3D point cloud.

The article "Know What Your Neighbors do: 3D Semantic Segmentation of Point Clouds" of Francis Engelmann et al. submitted on October 2, 2018 to arxiv.org, DOI: 10.1007/978-3-030-11015-4_29, regards a deep learning architecture, which addresses the problem of 3D semantic segmentation of unstructured point clouds, wherein grouping techniques defining point neighborhoods in the initial world space and the learned feature space are introduced.

Based on the above, it is an object of the present invention to overcome the above-mentioned disadvantages and to simplify and automatize the process of crash-test analysis, thereby saving processing time and working costs. In particular, it is an object of the invention to obtain a data pipeline of the complete process, wherein 2D image data of a crash-test is received as input data, becomes processed and analysed, and the analysed data is finally stored for further applications. Furthermore, it is an object of the present invention to improve the accuracy of the crash-test analysis.

At least one of these objects of the present invention is solved by the subject-matter of the independent claims and is further developed by the features of the respective dependent claims.

According to that, the present invention discloses a computer-implemented method for automatically processing and analysing vehicle crash-test data using a machine learning model. The computer-implemented method comprises at least the following steps:
- receiving a sequence of 2D images of a vehicle recorded by cameras from different angles and at different time steps between a first time step and a last time step during a vehicle crash-test,
- reconstructing a 3D point cloud for each of the different time steps from the sequence of 2D images, wherein each 3D point cloud comprises a multitude of data points,
- generating a segmentation of the multitude of data points of each 3D point cloud by applying a pretrained machine learning model, the segmentation comprising at least a first segmented portion representing a first part of the vehicle,
- assigning a first label to each data point included in the first segmented portion by applying the pretrained machine learning model, wherein the first label describes the first part of the vehicle,
- performing a tracking of each data point included in the first segmented portion over the different time steps based on the 3D point clouds reconstructed for the different time steps by:
   assigning an ID to each data point included in the first segmented portion of the 3D point cloud reconstructed for the last time step and
   tracking each data point included in the first segmented portion based on its assigned ID back in time starting from the last time step, and
- analysing respective positions of the tracked data points included in the first segmented portion over the different time steps,
characterized by that
the step of performing a tracking of each data point included in the first segmented portion over the different time steps occurs under at least one of the following assumptions when comparing a time step with its respective previous time step:
- minimizing a change of a respective distance between two different data points,
- minimizing a change of an axis extending perpendicular to a respective surface of a polygon of a polygonal mesh connecting the data points with each other,
- minimizing intersecting edges of a polygonal mesh connecting the data points with each other,
- minimizing a change of surface areas of a polygonal mesh connecting the data points with each other,
- maximizing Bayesian likelihood.

During a vehicle crash-test, the deformation of different parts of the vehicle like the vehicle body, the greenhouse and the airbag, especially the airbag inflation, is recorded by several high-speed cameras with preferably high image resolution from different angles and at different time steps starting from a first time step and ending with a last time step. That sequence of recorded two-dimensional (2D) images is provided as input data to a data processing system, e.g. a computer or computer system, especially a respective processor thereof, in order to perform the computer-implemented method steps as listed above. Based on the 2D image data recorded from different angles at different time steps three-dimensional (3D) point cloud data is generated, from which a 3D point cloud is reconstructed for each of the different time steps, i.e. for each time step between the first and the last time step. Thus, each 3D point cloud corresponds to one specific time step between the first and the last time step. Each 3D point cloud comprises a multitude of data points, wherein each of those data points has three spatial coordinates and an assigned intensity value or a colour value, respectively. Thus, the 3D point cloud data represents a set of three spatial coordinates and an assigned intensity value or a colour value, respectively, belonging to the respective data points included in a respective 3D cloud.

According to the invention, an already pretrained machine learning model is applied in order to carry out at least the following steps, wherein the computer-implemented method might comprise generating the pretrained machine learning model. The machine learning model may be based on a pretrained neural network, e.g. a pretrained recurrent neural network. A first step to be carried out by applying the pretrained machine learning model is to generate a segmentation of the multitude of data points of each 3D point cloud. The multitude of data points of each 3D point cloud reconstructed for each respective time step is segmented according to the respective specification of the pretrained machine learning model or according to the specific task for which the machine learning model has been trained. According to the present invention, the segmentation comprises at least a first segmented portion of that multitude of data points of each 3D point cloud, wherein the first segmented portion represents a first part of the vehicle, in particular a first predetermined part of the vehicle. In this regard, predetermined means that it is predefined which part of the vehicle should be segmented. A second step to be carried out by applying the pretrained machine learning model is to assign a first label to each data point included in the first segmented portion. The first label describes the first part of a vehicle represented by the first segmented portion. The first part of the vehicle can be e.g. the airbag, roof, door, seat, A-pillar, B-pillar, C-pillar etc..

The segmentation can also comprise a number of segmented portions including the first segmented portion, wherein each of the number of segmented portions represents a different part of the vehicle. In that case, a label describing the respective part of the vehicle is assigned to each data point included in the respective segmented portion of the number of segmented portions. Thus, several different parts of the vehicle, or even all parts of the vehicle, can be segmented by applying the pretrained machine learning model. In that case, the segmentation can further comprise a second segmented portion, a third segmented portion etc., wherein the data points included in the respective segmented portion are labelled with a second label, a third label etc., wherein the second label, third label etc. each describes a respective part of the vehicle.

In general, by segmenting the multitude of data points of each 3D point cloud, the respective multitude of data points is processed such that it is grouped into homogeneous regions with similar properties. These homogeneous regions correspond to respective segmented portions, which, in case of the present invention, depict or represent parts of a vehicle. Assigning the first label to the respective data points included in the first segmented portion means to classify or to identify the object being represented by this first segmented portion. The steps of segmenting the multitude of data points of each 3D point cloud and labelling each data point included in the first segmented portion are performed for each time step of the different time steps. In general, clustering and classifying the data points of each 3D point cloud or the pixels of a 2D image, respectively, into a predefined number of classes is also known as semantic segmentation whose task is to obtain an understanding of the 3D point cloud on the level of the data points or of the 2D image on pixel-level by assigning an object class to each data point or pixel, respectively.

The computer-implemented method according to the invention can preferably comprise a step of post-processing the 3D point cloud data, i.e. the multitude of data points of each 3D point cloud, before performing the tracking of each data point included in the first segmented portion and/or a step of post-processing the received 2D image data, i.e. the received 2D images, before generating 3D point clouds. The post-processing includes to reduce noise of the 3D point cloud data or the recorded 2D image data, respectively, and to remove outliers from the 3D point cloud data or the recorded 2D image data, respectively. This is advantageous since data points representing noise or outliers are not considered any further for the step of tracking and/or the step of reconstructing 3D point clouds. Such post-processing might be carried out by applying a further machine learning model which has been trained to recognize noise components and outliers as well as to reduce those noise components and to eliminate those outliers.

After the steps of generating a segmentation and assigning a first label the computer-implemented method comprises the step of performing a tracking of each data point included in the first segmented portion over the different time steps, i.e. from one time step to the respective next time step. The tracking includes to assign an ID to each of the data points included in the first segmented portion, wherein that assignment of IDs is carried out based on the 3D point cloud which is reconstructed for the last time step. Thus, each data point of the first segmented portion of the 3D point cloud reconstructed for the last time step receives a specific and especially unique ID, for example a number. Then, each data point of the first segmented portion is tracked back in time based on its ID, i.e. starting from the 3D point cloud reconstructed for the last time step, going to the 3D point cloud reconstructed for the respective next time step being the directly preceding or previous time step etc. until going to the 3D point cloud reconstructed for the first time step. In case, the segmentation comprises a number of segmented portions, at least one, preferably predetermined, segmented portion of the number of segmented portions is selected and after that selection the tracking of each data point included in the selected segmented portion is performed over the different time steps.

Furthermore, the step of performing a tracking of each data point included in the first segmented portion over the different time steps might include generating a polygonal, in particular a triangular, mesh representation of each of the 3D point clouds. A polygonal mesh presentation of 3D point clouds helps to visualize the 3D point clouds and to simplify the tracking of the respective data points over the different time steps. Preferably, the polygonal mesh is displayed together with the 3D point cloud on a display. When generating the polygonal mesh representation, the 3D point cloud generated for the last time step is considered as the starting point. Preferably, a triangular mesh representation is generated, e.g. by applying the so-called Delaunay triangulation, wherein for a given set of discrete points a mesh of triangles is generated between these discrete points in such a way that no point is inside the circumcircle of any triangle.

The step of performing a tracking of each data point included in the first segmented portion over the different time steps occurs under at least one of the following assumptions when comparing a time step with its respective previous time step:
- minimizing a change of a respective distance between two different data points,
- minimizing a change of an axis extending perpendicular to a respective surface of a polygon of a polygonal mesh connecting the data points with each other,
- minimizing intersecting edges of a polygonal mesh connecting the data points with each other,
- minimizing a change of surface areas of the polygonal mesh connecting the data points with each other,
- maximizing Bayesian likelihood.

The tracking is carried out by a computer algorithm based on certain predefined assumptions, as indicated above. These assumptions give instructions how the tracking of the respective data points should be performed.

When tracking of each data point included in the first segmented portion over the different time steps is completed, the computer-implemented method includes to analyse the respective positions of the tracked data points included in the first segmented portion over the different steps. In particular, this might include to calculate differences in the positions of these tracked data points over the different time steps in order to access the dynamics of the data points and to calculate predetermined parameters, in particular KPIs like maximum inflation of the airbag, maximum deformation of certain parts of the vehicle, velocity of airbag inflation, position of airbag during its inflation and its relation to other vehicle components.

According to an embodiment of the present invention, the step of generating a segmentation of the multitude of data points of each 3D point cloud might include a pre-processing of the multitude of data points of each 3D point cloud. The pre-processing comprises projecting the multitude of data points of each 3D point cloud on at least one 2D plane and generating the segmentation based on a respective resulting 2D projection of the multitude of data points of each 3D point cloud. Consequently, also the step of assigning a first label to each data point included in the first segmented portion is performed based on the 2D projections. **In** addition, the computer-implemented method further includes the step of transforming the 2D projections back to the 3D point clouds after having performed the steps of generating a segmentation and assigning a first label. **In** case, a commercial algorithm is applied for the step of generating 3D point cloud data from the sequence of received 2D, the transformation rules between the recorded 2D image data as input data and the 3D point cloud data as output data are usually unknown. Thus, the matching between the recorded 2D image data and the reconstructed 3D point clouds is not direct. To overcome that issue, the computer-implemented method according to the present invention provides the option of producing 2D projections of the individual 3D point clouds on at least one, in particular predefined, 2D plane or surface so that the segmentation can be performed in two-dimensional space, namely based on the resulting 2D projections. A segmentation performed in a two-dimensional space is in the following mentioned as 2D segmentation and might be based e.g. on the so-called U-net architecture being applied to the 2D projections. The 2D segmentation has the advantage that a conversion between the 2D projections and the 3D point clouds can easily be performed since the transformation rules between the 3D point clouds and their 2D projections are known. Furthermore, assigning the first label to the data points of the first segmented portion being a part of a 2D projection, thus, carrying out a labelling in two-dimensional space, is easier than carrying out a labelling in a three-dimensional space.

Advantageously, the pre-processing of the multitude of data points of each 3D point cloud includes to project the multitude of data points of each 3D point cloud on at least two different 2D planes, thus, to produce different projections of the same 3D point cloud. Consequently, the steps of generating a segmentation and assigning a first label are performed based on each of the at least two different 2D projections. Producing different projections provides for a data augmentation in a natural way, which can improve the accuracy of the analysis of the data points and the respective dynamics behind.

According to an embodiment of the invention, the computer-implemented method comprises the step of generating the pretrained machine learning model before applying it for generating a segmentation by
- providing a dataset comprising a plurality of labelled 2D projections of 3D point clouds showing a vehicle at different time steps during a vehicle crash-test, wherein each labelled 2D projection includes a segmentation of at least the first part of the vehicle and at least the first label describing the first part of the vehicle,
- splitting the dataset in training data and test data,
- training the machine learning model to generate a segmentation of at least the first part of the vehicle shown in each 2D projection and to assign at least the first label to the segmented first part of the vehicle by utilizing the training data,
- testing the machine learning model to evaluate the performance of the machine learning model by utilizing the test data and
- outputting the tested machine learning model as the pretrained machine learning model.

The dataset is provided to a data processing system, in particular to a processor of a data processing system, which carries out the above-mentioned steps. First, the dataset is split into two groups of data, namely training data and test data. The labelled 2D projections of 3D point clouds included in the dataset show the vehicle during the vehicle crash-test at many different time steps and from different perspectives so that many different states or conditions of the respective labelled parts of the vehicle undergoing a crash are illustrated. Preferably, the labelled 2D projections include not only a segmentation of the first part, but also of further parts of the vehicle and, correspondingly, not only the first label, but also other labels as a second label, a third label etc. describing the respective further parts of the vehicle. The training data is used to train the machine learning model to segment at least the first part of the vehicle shown in a respective 2D projection of a 3D point cloud and to assign at least the first label to that segmented first part. The training procedure is carried out by applying a training algorithm. Thus, the machine learning model learns the relations that enable it to recognize and extract at least the first segmented and labelled part of the vehicle out of the input image. **In** contrast to the training data, the test data is used to evaluate the performance or to determine the quality of the machine learning model during the training procedure. It is important to note that the test data is not used for training the machine learning model, i.e. training data and test data have to differ from each other, in order to guarantee that the machine learning model has not only memorized the training data, but has learned and recognizes the underlying relations of the training data. For example, the quality of the machine learning model might be determined by determining an accuracy value, which is a percentage of accurate predictions or a ratio of the number of correct predictions to the total number of predictions regarding the task of performing the 2D segmentation and 2D labelling, especially based on 2D projections of 3D point clouds.

Training and testing the machine learning model can be performed several times, for example by implementing a k-fold cross validation. When the testing of the machine learning model results in an accuracy value being at least equal to or larger than a predetermined accuracy value, the training and testing is stopped and the tested or validated ML model can be outputted as the pretrained machine learning model and, thus, can be used for giving predictions on new data. The predetermined accuracy value can be considered as a minimum threshold, which at least has to be reached by the accuracy value of the pretrained machine learning model in order to guarantee a certain required quality of the pretrained machine learning model. Preferably, the resulting pretrained machine learning model is stored for further use in a non-transitory computer-readable storage medium of the data processing system, e.g. a computer or computer-implemented system. **In** general, the resulting pretrained machine learning model includes or represents the rules, numbers, and any other algorithm-specific data structures required to make predictions concerning a specified task, which, in the given example, is a 2D segmentation and 2D labelling based on 2D projections of 3D point clouds.

Alternatively, the dataset used for training and testing the machine learning model might comprise a plurality of labelled 2D images showing a vehicle at different time steps during a vehicle crash-test, wherein each labelled 2D image includes a segmentation of at least the first part of the vehicle and at least the first label describing the first part of the vehicle. The 2D images included in the dataset preferably show the vehicle not only at different time steps but also from different angles to have different perspectives on the vehicle undergoing a crash.

As an alternative to a 2D segmentation as described above, a further embodiment of the present invention is that the step of generating a segmentation of the multitude of data points of each 3D point cloud and the step of assigning a first label to each data point included in the first segmented portion are both performed in three-dimensional space by utilizing each of the reconstructed 3D point clouds directly. In general, a segmentation of 3D point clouds, in the following also mentioned as 3D segmentation, can be considered as a process of grouping data points of a 3D point cloud into different homogeneous regions such that the data points in the same isolated and meaningful region have similar properties. In contrast to a 2D segmentation, such a 3D segmentation performed in three-dimensional space has the advantage that the additional steps of projecting the multitude of data points of each 3D point cloud on at least one 2D plane and transforming the resulting 2D projections back to the respective 3D point clouds can be omitted. Furthermore, a 3D segmentation has the benefit of an improved accuracy compared to a 2D segmentation which is based on 2D projections of 3D point clouds. When projecting 3D point clouds on a 2D plane for performing the 2D segmentation, data or data points, respectively, might be lost, which, however, is not the case for a 3D segmentation performed directly on the 3D point clouds. Moreover, noise can be filtered out more easily in case of a 3D segmentation. In addition, segmentation is performed directly on the 3D point clouds, which are to be used for the analysis and calculation of predetermined parameters like KPIs. A segmentation directly of 3D point clouds can be performed e.g. by applying so-called PointNet-like architectures.

The computer-implemented method might further include the step of generating the pretrained machine learning model before applying it for generating a 3D segmentation as described above. The underlying training procedure is comparable to the training procedure applied to generate the pretrained machine learning model for generating a 2D segmentation and performing a 2D labelling based on 2D projections of 3D point clouds, with the difference that the input data, i.e. the dataset, and the specific task to be learned by the machine learning model are different. Consequently, the provided dataset comprises a plurality of labelled 3D point clouds showing a vehicle at different time steps during a vehicle crash-test. Each labelled 3D point cloud includes a segmentation of at least the first part of the vehicle and at least the first label, which describes the first part of the vehicle. After splitting the dataset in training data and test data, the machine learning model is trained to segment at least the first part of the vehicle in each 3D point cloud and to assign at least the first label to the segmented first part by utilizing the training data. The test data is used to test the machine learning model to evaluate its performance by utilizing the test data, as it is described above with regard to a 2D segmentation and 2D labelling based on 2D projections of 3D point clouds. Once the steps of training and testing the machine learning model are completed, the tested or validated machine learning model is outputted as the pretrained machine learning model. The pretrained machine learning model can be stored for further use in a non-transitory computer-readable storage medium of the computer-implemented system or the data processing system, respectively. Thus, the obtained pretrained machine learning model includes or represents the rules, numbers, and any other algorithm-specific data structures required to make predictions concerning the specified task of 3D segmentation and 3D labelling.

The computer-implemented method according to the present invention as described above allows to analyse and evaluate vehicle crash-test data completely automatically based on a sequence of 2D images of a vehicle recorded from different angles at different time steps as input data. By using the computer-implemented method according to the present invention, these input data are processed by applying different algorithms including machine learning algorithms in order to produce output data comprising information about predetermined parameters like KPIs being very important for the analysis of vehicle crash-tests.

In addition, the present invention further refers to a data processing system including a processor being configured to perform the computer-implemented method as described above, wherein the data processing system further includes at least a non-transitory computer-readable storage medium for storing processor-executable instructions or data and at least the pretrained machine learning model.

Moreover, the present invention regards a computer program comprising program instructions which, when the program is executed by a computer, cause the computer to carry out the steps of the computer-implemented method as described above.

The present invention including its advantages, features and applications will be presented in more detail by means of the following description of embodiments of the present invention and the corresponding figures, wherein the figures show:
- Figure 1:: a flowchart giving an overview of the computer-implemented method according to an embodiment of the present invention,
- Figure 2:: a schematic illustration of a crash-test experimental setup, recorded 2D images and reconstructed 3D point cloud showing an airbag,
- Figure 3:: a schematic illustration of a step of pre-processing comprised by the computer-implemented method according to an embodiment of the present invention,
- Figure 4:: an exemplary illustration of a segmented and labelled 2D projection of a 3D point cloud at a certain time step after the steps of segmentation and labelling comprised by the computer-implemented method of the present invention,
- Figure 5:: an exemplary illustration of segmented and labelled 2D projections of a 3D point clouds at later time steps than shown in Fig. 4,
- Figure 6:: schematic illustration of the step of performing a tracking of data points comprised by the computer-implemented method according to an embodiment of the present invention,
- Figure 7:: a flowchart giving an overview of the step of generating the pretrained machine learning model comprised by the computer-implemented method of the present invention, and
- Figure 8:: a schematic illustration of a computer program according to an embodiment of the present invention.

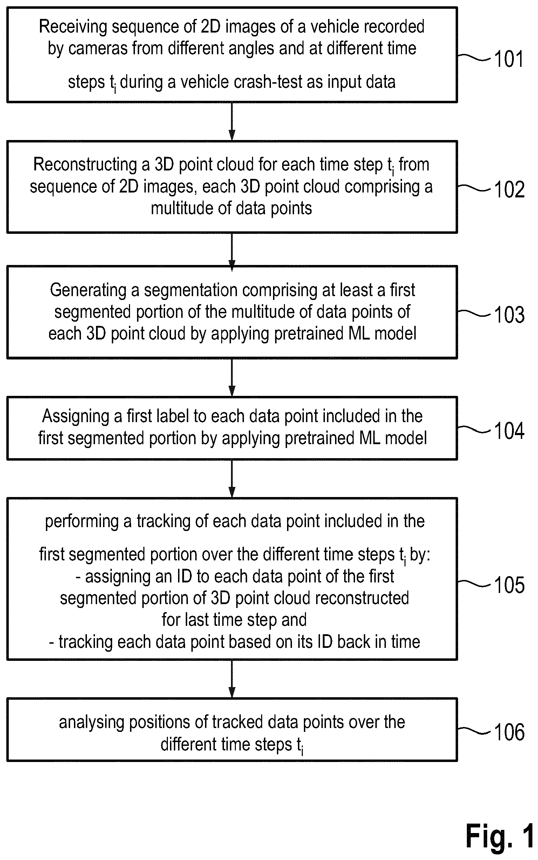

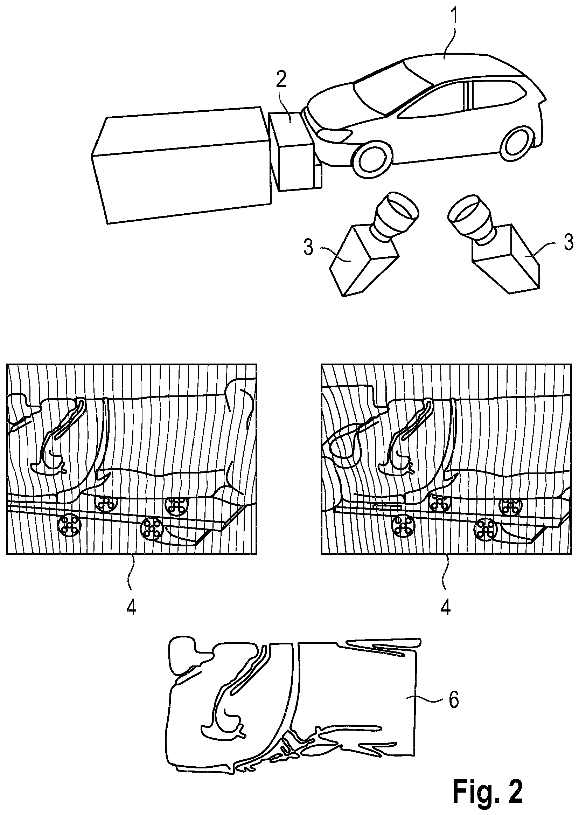

Figure 1 illustrates a flowchart giving an overview of the computer-implemented method according to the present invention, especially an overview of the mandatory steps of the computer-implemented method, while optional steps of the computer-implemented method are not illustrated in figure 1 for reasons of simplicity. As sketched in figure 1, the computer-implemented method comprises the step of receiving a sequence of 2D images of a vehicle recorded by cameras from different angles and at different time steps tᵢ during a vehicle crash-test, wherein this step is indicated with reference sign 101. The 2D images are input data, which are going to be processed and analysed by applying the computer-implemented method of the present invention. The sequence of 2D images comprises for each of the different time steps between a first time step and a last time step at least two 2D images of the vehicle used during the vehicle crash-test. These at least two 2D images are recorded by two cameras from different angles so that a 3D visualization can be generated. Figure 2 shows a schematic illustration of an optional experimental setup for the vehicle crash-test in the upper picture, wherein a vehicle 1 crashes into an obstacle 2, for example a wall. During the crash-test two cameras 3 record the vehicle 1 from different angles and at different time steps, wherein the cameras 3 are preferably high-speed cameras having a high spatial resolution. The two 2D images 4 recorded by the two cameras 3 at a certain time step are shown in the middle or in second row of figure 2 wherein the two 2D images exemplarily depict the airbag of the vehicle 1.

According to figure 1, the next method step, indicated with reference sign 102, of the computer-implemented method includes reconstructing a 3D point cloud from the received sequence of 2D images for each of the different time steps at which the 2D images have been recorded. An illustrative example of such a reconstructed 3D point cloud 6 depicting the airbag of the vehicle 1 is shown in figure 2, lower picture. To ensure that the different time steps can be assigned to the corresponding 2D images or to the reconstructed 3D point clouds, each 2D image is preferably assigned the respective time step at which it has been recorded. In addition, each 3D point cloud reconstructed from at least two 2D images recorded at a specific time step is preferably assigned that specific time step. Each reconstructed 3D point cloud comprises a multitude of data points. Each of these data points has three spatial coordinates and an assigned intensity value or a colour value, respectively. In other words, 3D point cloud data is generated from the sequence of 2D images for each of the different time steps, wherein a 3D point cloud is reconstructed from the 3D point cloud data for each of the different time steps. The 3D point cloud data represents a set of three spatial coordinates and an assigned intensity value or a colour value, respectively, belonging to the respective data points included in a respective 3D cloud at a certain time step.

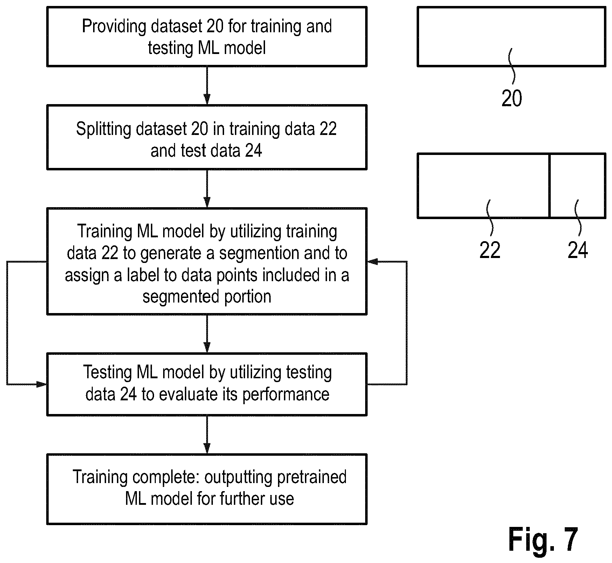

The computer-implemented method further includes the step of generating a segmentation comprising at least a first segmented portion representing a first part of the vehicle, preferably a predetermined first part of the vehicle, by applying a pretrained machine learning model. The term "machine learning" is abbreviated in the following by ML. That step is indicated with reference sign 103 in figure 1. The pretrained ML model may be based on a pretrained neural network, for example a pretrained recurrent neural network. In this regard, a predetermined first part of the vehicle means that it is predefined which part of the vehicle should be segmented. The multitude of data points of each of the reconstructed 3D point clouds is segmented according to the specification of the pretrained ML model or according to the specific task, for which the ML model has been trained. The step of generating a pretrained ML model by training a ML model can also be part of the computer-implemented method of the present invention. How a training of a ML model can be implemented, is exemplarily shown in figure 7 and discussed later on. The segmentation of the multitude of data points of each 3D point cloud can also comprise a number of segmented portions including the first segmented portion, wherein each of the number of segmented portions represents a different part of the vehicle. In general, segmenting the multitude of data points of each 3D point cloud means to process the multitude of data points such that the data points are grouped into homogeneous regions with similar properties. The homogeneous regions correspond to the segmented portions, which, in case of the present invention, represent parts of a vehicle like airbag, seat, roof, A-pillar, B-pillar, C-pillar, window, door, greenhouse etc.

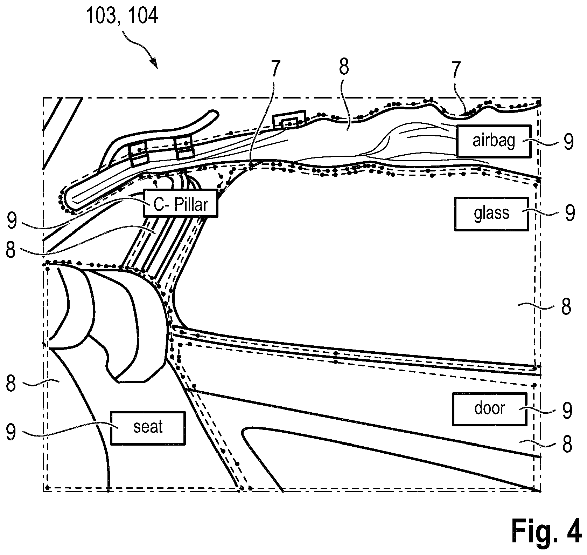

As illustrated by reference sign 104 in figure 4, the computer-implemented method comprises the step of assigning a first label to each data point included in the first segmented portion by applying the pretrained ML model. Assigning the first label to the respective data points included in the first segmented portion means to classify or to identify the objects represented by the first segmented portion of the 3D point cloud. In case of the present invention, the first label describes the first part of the vehicle represented by the first segmented portion. In case, the segmentation comprises a number of segmented portions, each of them representing different parts of the vehicle, e.g. a second segmented portion, a third segmented portion and so on, the data points thereof are labelled with a second label, a third label and so on, describing the respective part of the vehicle represented by the respective segmented portion.

The steps 103, i.e. segmenting the multitude of data points of each 3D point cloud, and 104, i.e. assigning a first label to each data point included in the first segmented portion, are performed for each time step of the different time steps. In general, clustering and classifying the data points of each 3D point cloud or the pixels of a 2D image, respectively, into a predefined number of classes is also known as semantic segmentation, whose task is to obtain an understanding of the 3D point cloud on the level of the data points or of the 2D image on pixel-level by assigning an object class to each data point or pixel, respectively.

The steps 103 and 104 according to figure 1 can be performed in at least two different ways, which are described in the following.

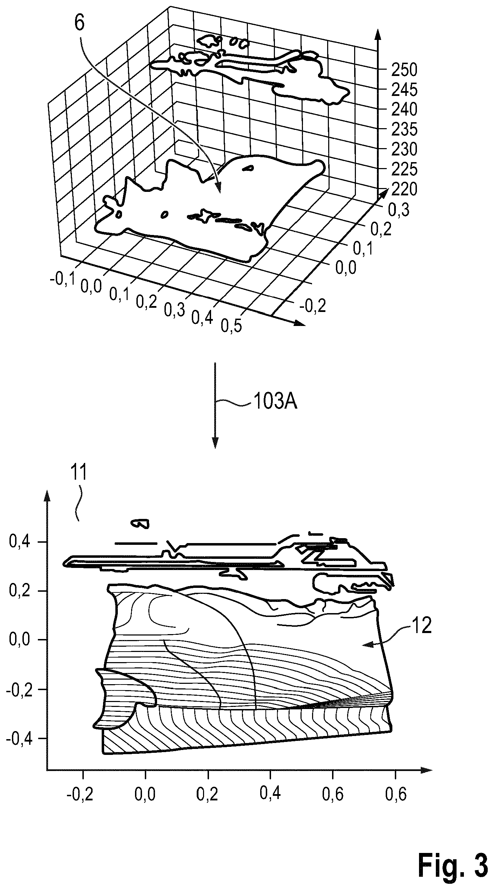

According to a first embodiment of the computer-implemented method, the step of generating a segmentation of the multitude of data points of each 3D point cloud includes a pre-processing of the multitude of data points of each 3D point cloud. The pre-processing comprises projecting the multitude of data points of each 3D point cloud on at least one 2D plane and generating the segmentation based on a respective resulting 2D projection of the multitude of data points of each 3D point cloud. That step of projecting the multitude of data points of a 3D point cloud 6 on a 2D plane 11, in particular being a predetermined 2D plane, is exemplarily shown in figure 3 and indicated with reference sign 103A. The upper picture in figure 3 demonstrates a 3D point cloud 6 in a three-dimensional coordinate system, which is transformed or converted to a 2D projection 12 of the data points of the 3D point cloud 6 on the 2D plane 11, shown in the lower picture of figure 3, by performing step 103A. Thus, the exemplary 2D projection 12 can be regarded as input data for the pretrained ML model. By carrying out a ML algorithm, the pretrained ML model is applied to each of the resulting 2D projections in order to generate a segmentation of the data points of the respective 2D projections, wherein the segmentation at least comprises a first segmented portion of the data points of the respective 2D projections. Thus, the segmentation is generated in a two-dimensional space, called 2D segmentation, which can be based e.g. on a so-called U-net architecture. Consequently, the step of assigning a first label to each data point included in the first segmented portion is also performed based on the 2D projections, i.e. the first label is assigned to each data point included in the first segmented portion of a respective 2D projection. In case of a 2D segmentation including more segmented portions than the first segmented portion, a respective second label, third label etc. is assigned to respective the data points of the other segmented portions. Such kind of 2D labelling has the benefit that the labelling of the respective data points in two-dimensional space is easier than a labelling in a three-dimensional space. After having completed the 2D labelling, the computer-implemented method further includes the step of transforming the 2D projections back to the 3D point clouds for a better visualization and tracking of respective data points of the 3D point clouds.

Apart from the benefits of an easier labelling and an easier segmentation in 2D, a further advantage of the above-described steps focusing on a 2D segmentation and a 2D labelling is that the transformation rules between the 3D point cloud and their 2D projections on a predetermined 2D plane are well-known. When a commercial algorithm is applied for the step of generating 3D point cloud data from the sequence of received 2D images, as it is exemplarily the case, the transformation rules between the recorded 2D image data as input data and the 3D point cloud data as output data are usually unknown. That problem is overcome by the steps of projecting the data points of the 3D cloud on a 2D plane and considering the resulting 2D projections for generating a segmentation and for assigning a label. At the same time, performing these steps has the benefit that a 2D segmentation and a 2D labelling is less complex and faster than a 3D segmentation and a 3D labelling.

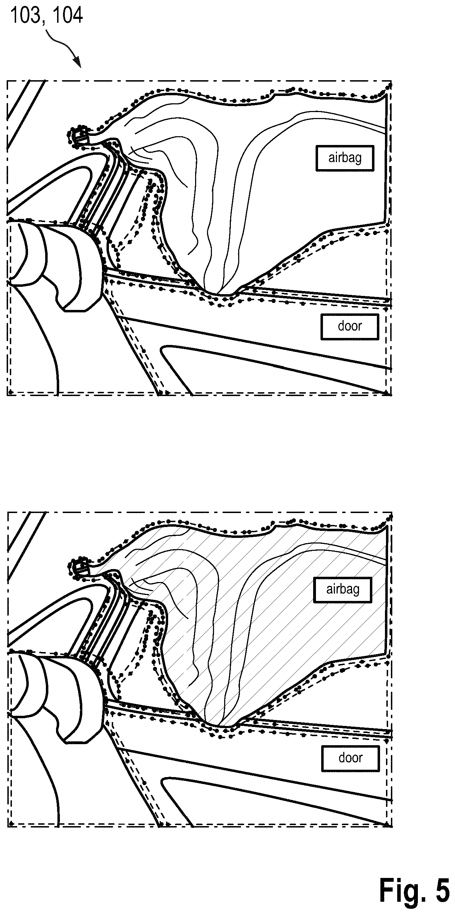

An exemplary illustration of a result of the steps of 2D segmentation and 2D labelling is shown in figures 4 and 5, wherein these steps have been performed by applying the same pretrained ML model. Figure 4 represents a segmented and labelled 2D projection of the multitude of data points 7 of a 3D point cloud reconstructed for a certain time step, thus, after having performed the steps of generating a segmentation and assigning a first label, indicated by reference signs 103 and 104. According to figure 4, the generated segmentation of the 2D projection comprises a number of segmented portions 8 including the first segmented portion 8, namely an exemplary total number of five segmented portions 8. A respective label 9 is assigned to each data point 7 included in each of the five segmented portions 8. This is shown in figure 4 for two exemplary data points 7, to which the first label 9, namely the exemplary label "airbag", has been assigned. In addition, further labels 9 are assigned to respective data points of the other segmented portions 8, namely the exemplary labels "door", "glass", "seat" and "C-pillar" as shown in figure 4. Thus, each of the labels 9 describes a part of the vehicle, wherein the respective part of the vehicle is represented by the corresponding segmented portion 8.

Figure 5 includes an upper and a lower image both showing a further segmented and labelled 2D projection of the multitude of data points 7 of a respective 3D point cloud reconstructed for a time step being a later time step than the time step according to figure 4. The 2D projection shown in the lower image corresponds to a 3D point cloud reconstructed for a later time step than the 2D projection shown in the upper image. When looking at the 2D projections in the order of the advancing time, i.e. in the order of figure 4, upper image of figure 5 and lower image of figure 5, it can be seen, for example, that the segmented portion labelled "airbag" is increasing with time while the segmented portion labelled "seat" is essentially the same and hardly changes with time.

Advantageously, the step of pre-processing the multitude of data points of each 3D point cloud includes to project the multitude of data points of each 3D point cloud on at least two different 2D planes, thus, to produce different projections of the same 3D point cloud. Consequently, the steps of generating a segmentation and assigning a first label are performed based on each of the at least two different 2D projections. Producing different projections provides for a data augmentation in a natural way, which can improve the accuracy of the analysis of the data points and the respective dynamics behind.

According to a second embodiment of the computer-implemented method, which is not shown in the figures and which is an alternative to generating a 2D segmentation as described above, the step of generating a segmentation of the multitude of data points of each 3D point cloud and the step of assigning a first label to each data point included in the first segmented portion are both performed in three-dimensional space by utilizing each of the reconstructed 3D point clouds directly. Generating the segmentation by using the 3D point clouds directly means grouping the data points of a respective 3D point cloud directly, i.e. in three-dimensional space, into different homogeneous regions such that the data points in the same isolated and meaningful region have similar properties. Using the reconstructed 3D point clouds directly for generating a segmentation and assigning at least the first label has the advantage that the above-described steps of projecting the data points of each 3D point cloud on at least one 2D plane and transforming the resulting 2D projections back to the respective 3D point clouds can be omitted. Furthermore, a 3D segmentation has the benefit of an improved accuracy compared to a 2D segmentation being based on 2D projections of 3D point clouds. When projecting 3D point clouds on a 2D plane for performing the 2D segmentation, data or data points, respectively, might be lost, which, however, is not the case for a 3D segmentation performed directly on the 3D point clouds. In addition, noise can be filtered out more easily in case of a 3D segmentation and segmentation is performed directly on the 3D point clouds, which are to be used for the analysis and calculation of predetermined parameters like KPIs. A segmentation directly of 3D point clouds can be performed e.g. by applying so-called PointNet-like architectures.

After having discussed two exemplary options of how to generate a segmentation of the multitude of data points of each 3D point cloud, the description of the computer-implemented method represented by the flowchart of figure 1 is continued. As illustrated by the flowchart in figure 1 and indicated with reference sign 105, the computer-implemented method comprises the step of performing a tracking of each data point included in the first segmented portion over the different time steps tᵢ, i.e. from one time step to the respective next time step. The tracking includes to assign an ID to each data point being included in the first segmented portion, wherein that assignment of IDs is carried out based on the 3D point cloud reconstructed for the last time step. Thus, each data point included in the first segmented portion of the 3D point cloud reconstructed for the last time step receives a specific and especially unique ID, for example a number, so that the respective assigned IDs differ from each other. After all of the data points included in the first segmented portion have been assigned a respective individual ID, each data point of the first segmented portion is tracked back in time based on its ID. That means the tracking starts at the 3D point cloud reconstructed for the last time step, continues with the 3D point cloud reconstructed for the next time step being the directly preceding or previous time step etc. and ends with the 3D point cloud reconstructed for the first time step.

In case, the generated segmentation comprises a number of segmented portions, at least one, preferably predetermined, segmented portion of the number of segmented portions is selected and after that selection the tracking of each data point included in the selected segmented portion is performed over the different time steps.

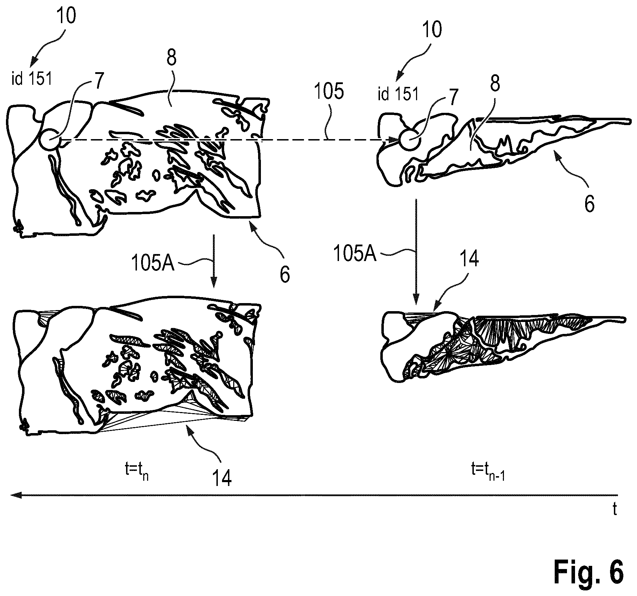

An example of the step of tracking, indicated with reference sign 105, is shown figure 6, upper pictures, wherein an exemplary data point 7 having an ID 10, namely "id 151", is tracked back in time from the last time step t = tₙ to the previous time step t= tₙ₋₁. Figure 6, upper picture on the left, illustrates a segmented portion corresponding to the first segmented portion 8 of a 3D point cloud 6, which is reconstructed for the last time step t = tₙ. The first segmented portion 8 comprises several data points, wherein only one data point 7 of the data points is exemplarily shown. An ID 10 has been assigned to that data point 7 of the first segmented portion 8, which is the ID "id 151". Starting from the first segmented portion 8 of the 3D point cloud 6 reconstructed for the last time step the data point 7 with ID "id 151" is tracked back in time to the previous time step t= tₙ₋₁. The axis of time in figure 6 below shows that time advances from right to left in figure 6. In the shown example, the first segmented portion 8 represents an airbag as first part of the vehicle. Thus, the first label being assigned to each data point 7 of the first segmented portion 8 is the label "airbag", which, however, is not shown in figure 6.

Moreover, the step of performing a tracking of each data point 7 included in the first segmented portion 8 over the different time steps can include generating a polygonal, in particular triangular, mesh 14 representation of each of the 3D point clouds 6. Such step is indicated with reference sign 105A in figure 6, when coming from the upper pictures and going to the lower pictures, as indicated by the respective arrows. As the lower pictures of figure 6 sketch, the data points of the first segmented portion 8 of the 3D point clouds 6 reconstructed for the last time step t = tₙ and the preceding time step t = tₙ₋₁ are connected with each other via a polygonal mesh 14 being a triangular mesh in the embodiment of figure 6. The triangular mesh representation in figure 6 has been generated by applying the so-called Delaunay triangulation, wherein for a given set of discrete points a mesh of triangles is generated between these discrete points in such a way that no point is inside the circumcircle of any triangle. As can be seen in figure 6 when comparing the upper pictures with the lower pictures, the triangular mesh presentation of the first segmented portion 8 of the 3D point clouds improves their visualization. Moreover, the meshing helps to simplify the tracking of the data points included in the first segmented portion 8 over the different time steps, as exemplarily shown in figure 6 from t = tₙ to t = tₙ₋₁. The step of meshing, indicated with reference sign 105A, preferably starts at the last time step t= tₙ using the 3D point cloud 6 generated at that last time step t= tₙ as a starting point, as it is the case for the step of tracking, as indicated by the respective arrow.

Performing the tracking of each data point 7 included in the first segmented portion 8 over the different time steps might occur under at least one of the following assumptions when comparing a time step with its respective previous time step:
- minimizing a change of a respective distance between two different data points,
- minimizing a change of an axis extending perpendicular to a respective surface of a polygon of a polygonal mesh connecting the data points with each other,
- minimizing intersecting edges of the polygonal mesh,
- minimizing a change of surface areas of the polygonal mesh,
- maximizing Bayesian likelihood.

The tracking is carried out by a computer algorithm based on certain predefined assumptions, as indicated above. These assumptions give instructions how the tracking of the respective data points should be performed. For example, the assumption of a minimized change of a respective distance between two different data points signifies that the positions of the respective data points change only slowly from time step to time step, which requires a small time interval between two time steps.

The last step of the computer-implemented method shown in the flowchart of figure 1 and indicated by reference sign 106 includes analysing respective positions of the tracked data points included in the first segmented portion over the different time steps. For example, the step of analysing can include to calculate differences in the positions of these tracked data points over the different time steps in order to access the dynamics of the data points. It can further include to calculate predetermined parameters, in particular KPIs like maximum inflation of the airbag, maximum deformation of certain parts of the vehicle, velocity of airbag inflation, position of airbag during its inflation and its relation to other vehicle components. Furthermore, analysing the positions of the tracked data points of the first segmented portion might also include calculating the volume of the first segmented portion by utilizing the generated polygonal o triangular mesh representation of the respective 3D point clouds. For example, in case the first segmented portion corresponds to the airbag of the vehicle, as it is the case in the embodiment of figure 6, the development of the airbag volume over time, i.e. from time step to time step, can be analysed.

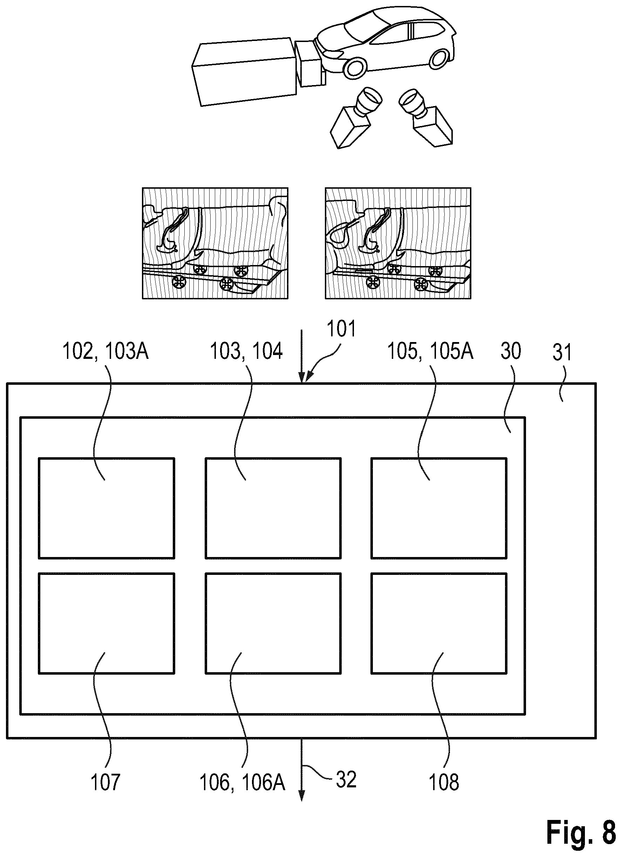

As depicted exemplarily in figure 8 by reference sign 107, the computer-implemented method might comprise the step of post-processing the 3D point cloud data, i.e. the multitude of data points of each 3D point cloud, before performing the tracking of each data point included in the first segmented portion and/or the step of post-processing the received 2D image data, i.e. the received 2D images, before reconstructing the 3D point clouds. The step of post-processing the 3D point cloud data might already be carried out before generating a segmentation and performing a labelling, i.e. directly after reconstructing the 3D point clouds. During the post-processing noise being present in the 3D point cloud data or in the recorded 2D image data, respectively, is reduced and outliers of the 3D point cloud data or the recorded 2D image data, respectively, are removed. This has the advantage that data points representing noise or outliers are not considered any further for the step of tracking and/or the step of reconstructing 3D point clouds. A twofold post-processing might also be carried out, wherein at first the received 2D image data is post-processed and then, in addition, the 3D point cloud data is post-processed before the step of performing a tracking. That twofold post-processing might improve the accuracy of the tracking due to an enhanced noise reduction and removal of outliers. The post-processing might be carried out by applying a further ML model which has been trained to recognize noise components and outliers in 3D point cloud data or 2D image data, respectively, and to reduce those noise components as well as to eliminate those outliers from the 3D point cloud data or the 2D image data, respectively.

As mentioned above, the steps of generating a segmentation and assigning a label to at least one segmented portion is performed by applying a pretrained ML model. In an embodiment of the computer-implemented method according to the present invention, the computer-implemented method can comprise the step of generating the pretrained ML model before applying it for generating a segmentation. The principles of the step of generating the pretrained ML model by training the underlying ML model is sketched in the flowchart of figure 7, basically giving an overview of a training procedure. According to figure 7 a dataset 20 is provided to a data processing system as a computer or computer-implemented system, in particular to a respective processor, for training and testing the ML model. The dataset 20 is split into two groups of data, namely training data 22 and test data 24. Then, a training session starts, wherein the ML model is trained by utilizing the training data 22 to generate a segmentation and to assign a label to data points included in a respective segmented portion according to the specific task or the instructions underlying the ML model. Then, a test session starts, wherein the ML model is tested by utilizing the test data 24 in order to evaluate the performance or determine the quality of the ML model. As represented by the respective arrows, training and testing can occur several times. Once the training is considered to be completed, the tested ML model is outputted as the pretrained ML model for further use. It should be remarked that the dataset 20 has to differ from the sequence of 2D images being processed by the computer-implemented method of the present invention.

Since the segmentation and, correspondingly, the labelling can be performed either in two-dimensional space based on 2D projections of 3D point clouds or in three-dimensional space directly based on the 3D point clouds, the applied pretrained ML model has to be trained in advance for the respective specific task. In case of generating the pretrained ML model for applying it to generate a segmentation of 2D projections and to label the respective segmented portions of 2D projections, the dataset 20 being provided comprises a plurality of labelled 2D projections of 3D point clouds showing a vehicle at different time steps during a vehicle crash-test. Each labelled 2D projection includes a segmentation of at least the first part of the vehicle and at least the first label describing the first part of the vehicle. Preferably, the labelled 2D projections include not only a segmentation of the first part, but also of further parts of the vehicle and, correspondingly, not only the first label, but also further labels as a second label, a third label etc. describing the respective further parts of the vehicle. After splitting the dataset 20 in training data 22 and test data 24, the ML model is trained to generate a segmentation of at least the first part of the vehicle shown in each 2D projection and to assign at least the first label to the segmented first part of the vehicle by utilizing the training data. The training procedure is carried out by applying a training algorithm. The ML model learns the relations that enable it to recognize and extract at least the first segmented and labelled part of the vehicle out of the input data. Then, the ML model is tested to evaluate the performance of the ML model during the training procedure by utilizing the test data 24. Finally, the tested ML model is outputted as the pretrained ML model.

In case of generating the pretrained ML model for applying it to generate a segmentation based on the 3D point clouds and to label the respective segmented portions of 3D point clouds, the dataset 20 being provided comprises a plurality of labelled 3D point clouds showing a vehicle at different time steps during a vehicle crash-test. Each labelled 3D point cloud includes a segmentation of at least the first part of the vehicle and at least the first label describing the first part of the vehicle. After splitting the dataset 20 in training data 22 and test data 24, the ML model is trained to generate a segmentation of at least the first part of the vehicle shown in each 3D point cloud and to assign at least the first label to the segmented first part of the vehicle by utilizing the training data. Then, the ML model is tested to evaluate the performance of the ML model by utilizing the test data 24. Finally, the tested ML model is outputted as the pretrained ML model.

In any case, training data 22 and test data 24 have to differ from each other, in order to guarantee that the ML model has not only memorized the training data 22, but has learned and recognizes the underlying relations of the training data 22. The quality of the ML model can be determined by an accuracy value, which is a percentage of accurate predictions or, respectively, a ratio of the number of correct predictions to the total number of predictions regarding the specific task underlying the ML model. Training and testing the ML model can be performed several times, for example by implementing a k-fold cross validation. When the testing of the ML model results in an accuracy value being at least equal to or larger than a predetermined accuracy value, the training and testing is stopped. The tested or validated ML model can be outputted as the pretrained ML model and used for giving predictions on new data like the 3D point cloud data reconstructed from the sequence of the 2D images. The predetermined accuracy value can be considered as a minimum threshold, which at least has to be reached by the accuracy value of the pretrained ML model in order to guarantee a certain required quality of the pretrained ML model. Preferably, the resulting pretrained ML model is stored for further use in a non-transitory computer-readable storage medium of the computer-implemented system or the data processing system, respectively. In general, the resulting pretrained ML model includes or represents the rules, numbers, and any other algorithm-specific data structures required to make predictions concerning a specified task, e.g. generating a 2D segmentation and 2D labelling based on 2D projections of 3D point clouds or generating a 3D segmentation and 3D labelling based on 3D point clouds.

Figure 8 represents a schematic overview of a computer program 30 according to an embodiment of the present invention. The computer program 30 can be embedded in a cloud service 31 or cloud infrastructure. After having carried out a vehicle crash-test, as symbolized in the upmost picture of figure 8, the computer program 30 receives input data being the sequence of 2D images of the vehicle recorded by cameras from different angles and at different time steps (see figure 2 and middle picture in figure 8), which is symbolized by step 101 according to figure 1 and sketched by an arrow in figure 8 .

The computer program 30 comprises different program instructions causing the processor to carry out the steps of the computer-implemented method according to a specific embodiment of the invention, when the computer program 30 is executed by a processor of a data processing system. The different program instructions are symbolized by rectangles in figure 8 and include instructions to carry out the steps of:
- reconstructing 3D point clouds (reference sign 102) and pre-processing data by producing 2D projections from 3D point clouds on a 2D plane,
- post-processing data to reduce noise and to remove outliers (reference sign 107),
- generating a segmentation (reference sign 103) and assigning a label to at least one segmented portion (reference sign 104) by applying a pretrained ML model, thus, carrying out a ML algorithm,
- meshing data points (reference sign 105A), i.e. generating a polygonal mesh representation of 3D point clouds, and performing a tracking of data points included in the segmented portion or the segmented portions, respectively (reference sign 105),
- analysing the tracked data points (reference sign 106) and calculating parameters like KPIs (reference sign 106A), and
- saving or storing the respective results obtained from the previously mentioned step and producing a report of those results (reference sign 108).

When the program instructions have been carried out, in particular by applying respective algorithms, an output 32 is generated. The output 32 includes the calculated KPIs, further parameters that might be used for subsequent FEM simulations and the polygonal mesh representation or the underlying mesh model, respectively.

Although not shown in the figures, the present invention also comprises a data processing system including a processor configured to perform the computer-implemented method according to an embodiment of the invention. The data processing unit includes a non-transitory computer-readable storage medium for storing processor-executable instructions or data and at least the pretrained machine learning model.

### List of reference signs

- 1: vehicle
- 2: obstacle
- 3: camera
- 4: 2D image
- 6: 3D point cloud
- 7: data point of 3D point cloud
- 8: segmented portion
- 9: label
- 10: ID
- 11: 2D plane
- 12: 2D projection from 3D point cloud
- 14: polygonal mesh
- 20: dataset
- 22: training data
- 24: test data
- 30: computer program
- 31: cloud service
- 32: output
- 101: receiving input data
- 102: step of reconstructing 3D point clouds
- 103: step of generating a segmentation
- 103A: step of pre-processing by producing 2D projections from 3D point clouds
- 104: step of assigning a label
- 105: step of tracking
- 105A: step of meshing
- 106: step of analysing
- 106A: step of KPI calculation
- 107: step of post-processing
- 108: step of saving and producing a, report

## Claims

1. A computer-implemented method for automatically processing and analysing vehicle (1) crash-test data using a machine learning model, comprising the steps:
- receiving a sequence of 2D images (4) of a vehicle (1) recorded by cameras (3) from different angles and at different time steps (tᵢ = tᵢ, ..., tₙ) between a first time step (t₁) and a last time step (tₙ) during a vehicle (1) crash-test,
- reconstructing a 3D point cloud (6) for each of the different time steps (tᵢ) from the sequence of 2D images (4), wherein each 3D point cloud (6) comprises a multitude of data points (7),
- generating a segmentation of the multitude of data points (7) of each 3D point cloud (6) by applying a pretrained machine learning model, the segmentation comprising at least a first segmented portion (8) representing a first part of the vehicle (1),
- assigning a first label (9) to each data point (7) included in the first segmented portion (8) by applying the pretrained machine learning model, wherein the first label (9) describes the first part of the vehicle (1),
- performing a tracking of each data point (7) included in the first segmented portion (8) over the different time steps (tᵢ) based on the 3D point clouds (6) reconstructed for the different time steps (tᵢ) by:
assigning an ID (10) to each data point (7) included in the first segmented portion (8) of the 3D point cloud (6) reconstructed for the last time step (tₙ) and
tracking each data point (7) included in the first segmented portion (8) based on its assigned ID (10) back in time starting from the last time step (tₙ), and
- analysing respective positions of the tracked data points (7) included in the first segmented portion (8) over the different time steps (tᵢ)
**characterized in that**
the step of performing a tracking of each data point (7) included in the first segmented portion (8) over the different time steps (tᵢ) occurs under at least one of the following assumptions when comparing a time step with its respective previous time step:
- minimizing a change of a respective distance between two different data points (7),
- minimizing a change of an axis extending perpendicular to a respective surface of a polygon of a polygonal mesh (14) connecting the data points (7) with each other,
- minimizing intersecting edges of a polygonal mesh (14) connecting the data points (7) with each other,
- minimizing a change of surface areas of a polygonal mesh (14) connecting the data points (7) with each other,
- maximizing Bayesian likelihood.

2. The computer-implemented method according to claim 1, wherein the pretrained machine learning model is based on a pretrained neural network, in particular on a pretrained recurrent neural network.

3. The computer-implemented method according to claim 1 or 2, wherein the step of generating a segmentation includes
pre-processing the multitude of data points (7) of each 3D point cloud (6) by projecting the multitude of data points (7) of each 3D point cloud (6) on at least one 2D plane (11) and
generating the segmentation based on a respective resulting 2D projection (12) of the multitude of data points (7) of each 3D point cloud (6),
wherein the step of assigning a first label (9) to each data point (7) included in the first segmented portion (8) is performed based on the 2D projections (12), and
wherein the method further includes the step of transforming the 2D projections (12) back to the 3D point clouds (6) after having performed the steps of generating a segmentation and assigning a first label (9).

4. The computer-implemented method according to claim 3, wherein the step of pre-processing the multitude of data points (7) of each 3D point cloud (6) occurs by projecting the multitude of data points (7) of each 3D point cloud (6) on at least two different 2D planes (11) and wherein the steps of generating a segmentation and assigning a first label are performed based on each of the at least two different 2D projections (12).

5. The computer-implemented method according to claim 3 or 4, further including the step of generating the pretrained machine learning model before applying it for generating a segmentation by
- providing a dataset (20) comprising a plurality of labelled 2D projections (12) of 3D point clouds (6) showing a vehicle (1) at different time steps during a vehicle (1) crash-test, wherein each labelled 2D projection includes a segmentation of at least the first part of the vehicle (1) and at least the first label (9) describing the first part of the vehicle (1),
- splitting the dataset (20) in training data (22) and test data (24),
- training the machine learning model to generate a segmentation of at least the first part of the vehicle (1) shown in each 2D projection (12) and to assign at least the first label (9) to the segmented first part of the vehicle (1) by utilizing the training data (22),
- testing the machine learning model to evaluate the performance of the machine learning model by utilizing the test data (24) and
- outputting the tested machine learning model as the pretrained machine learning model.

6. The computer-implemented method according to claim 1 or 2, wherein the step of generating a segmentation of the multitude of data points (7) of each 3D point cloud (6) and the step of assigning a first label (9) to each data point (7) included in the first segmented portion (8) are both performed in three-dimensional space by utilizing each of the reconstructed 3D point clouds (6) directly.

7. The computer-implemented method according to claim 6, further including the step of generating the pretrained machine learning model before applying it for generating a segmentation by
- providing a dataset (20) comprising a plurality of labelled 3D point clouds (6) showing a vehicle (1) at different time steps during a vehicle (1) crash-test, wherein each labelled 3D point cloud (6) includes a segmentation of at least the first part of the vehicle (1) and at least the first label (9) describing the first part of the vehicle (1),
- splitting the dataset (20) in training data (22) and test data (24),
- training the machine learning model to generate a segmentation of at least the first part of the vehicle (1) shown in each 3D point cloud (6) and to assign at least the first label (9) to the segmented first part of the vehicle (1) by utilizing the training data (22),
- testing the machine learning model to evaluate the performance of the machine learning model by utilizing the test data (24) and
- outputting the tested machine learning model as the pretrained machine learning model.

8. The computer-implemented method according to one of claims 1-7, wherein the step of performing a tracking of each data point (7) included in the first segmented portion (8) over the different time steps (tᵢ) includes generating a polygonal, in particular triangular, mesh (14) representation of each of the 3D point clouds (6).

9. The computer-implemented method according to one of claims 1-8, wherein the step of analysing the positions of tracked data points (7) included in the first segmented portion (8) over the different time steps (tᵢ) includes calculating differences in the positions of the tracked data points (7) over the different time steps (tᵢ) for accessing the dynamics of the data points (7) of the first segmented portion (8) and calculating predetermined parameters, in particular key performance indicators.

10. The computer-implemented method according to one of claims 1-9, further comprising the step of post-processing the multitude of data points (7) of each 3D point cloud before performing the tracking of each data point (7) included in the first segmented portion (8) and/or the step of post-processing the received 2D images before generating 3D point clouds (6), wherein post-processing includes reducing noise of the multitude of data points (7) of each 3D point cloud (6) and/or of the recorded 2D images, respectively, and removing outliers from the multitude of data points (7) of each 3D point cloud (6) and/or from the recorded 2D images, respectively.

11. The computer-implemented method according to one of claims 1-10, wherein the segmentation comprises a number of segmented portions (8) including the first segmented portion (8), each of the number of segmented portions representing a different part of the vehicle (1), wherein a label (9) describing the respective part of the vehicle (1) is assigned to each data point (7) included in the respective segmented portion (8) of the number of segmented portions (8), and
wherein the method further includes the step of selecting at least one segmented portion (8) of the number of segmented portions (8) and performing the tracking of each data point (7) included in that selected segmented portion (8) over the different time steps (tᵢ).

12. The computer-implemented method according to one of claims 1-11, wherein the first segmented portion (8) represents an airbag of the vehicle (1) and the first label (9) assigned to each data point (7) of the first segmented portion (8) is the label "airbag".

13. A data processing system comprising means for carrying out the method according to one of claims 1-12.

14. A computer program (30) comprising program instructions which, when the program is executed by a processor of a data processing system, cause the processor to carry out the steps of the computer-implemented method according to one of claims 1-12.

## Patentansprüche

1. Computerimplementiertes Verfahren zum automatischen Verarbeiten und Analysieren von Crashtest-Daten eines Fahrzeugs (1) unter Verwendung eines maschinellen Lernmodells, umfassend die Schritte:
- Empfangen einer Sequenz von 2D-Bildern (4) eines Fahrzeugs (1), die durch Kameras (3) aus unterschiedlichen Winkeln und zu unterschiedlichen Zeitschritten (tᵢ = t₁, ..., tₙ) zwischen einem ersten Zeitschritt (t₁) und einem letzten Zeitschritt (tₙ) während eines Crash-Tests eines Fahrzeugs (1) aufgenommen wurden,
- Rekonstruieren einer 3D-Punktwolke (6) für jeden der unterschiedlichen Zeitschritte (tᵢ) aus der Sequenz von 2D-Bildern (4), wobei jede 3D-Punktwolke (6) eine Mehrzahl von Datenpunkten (7) umfasst,
- Erzeugen einer Segmentierung der Mehrzahl von Datenpunkten (7) jeder 3D-Punktwolke (6) durch Anwenden eines vortrainierten maschinellen Lernmodells, die Segmentierung umfassend mindestens einen ersten segmentierten Abschnitt (8), der einen ersten Teil des Fahrzeugs (1) darstellt,
- Zuweisen einer ersten Kennzeichnung (9) zu jedem Datenpunkt (7), der in dem ersten segmentierten Abschnitt (8) eingeschlossen ist, durch Anwenden des vortrainierten maschinellen Lernmodells, wobei die erste Kennzeichnung (9) den ersten Teil des Fahrzeugs (1) beschreibt,
- Durchführen einer Verfolgung jedes Datenpunkts (7), der in dem ersten segmentierten Abschnitt (8) eingeschlossen ist, über die unterschiedlichen Zeitschritte (tᵢ) basierend auf den 3D-Punktwolken (6), die für die unterschiedlichen Zeitschritte (tᵢ) rekonstruiert wurden, durch:
Zuweisen einer ID (10) zu jedem Datenpunkt (7), der in dem ersten segmentierten Abschnitt (8) der 3D-Punktwolke (6) eingeschlossen ist, die für den letzten Zeitschritt (tₙ) rekonstruiert wird, und
Verfolgen jedes Datenpunkts (7), der in dem ersten segmentierten Abschnitt (8) eingeschlossen ist, basierend auf seiner zugewiesenen ID (10) rückwärts in der Zeit beginnend von dem letzten Zeitschritt (tₙ), und
- Analysieren jeweiliger Positionen der verfolgten Datenpunkte (7), die in dem ersten segmentierten Abschnitt (8) über die unterschiedlichen Zeitschritte (tᵢ) eingeschlossen sind
**dadurch gekennzeichnet, dass**
der Schritt des Durchführens einer Verfolgung jedes Datenpunkts (7), der in dem ersten segmentierten Abschnitt (8) eingeschlossen ist, über die unterschiedlichen Zeitschritte (tᵢ) unter mindestens einer der folgenden Annahmen erfolgt, wenn ein Zeitschritt mit seinem jeweiligen vorherigen Zeitschritt verglichen wird:
- Minimieren einer Änderung eines jeweiligen Abstands zwischen zwei unterschiedlichen Datenpunkten (7),
- Minimieren einer Änderung einer Achse, die sich senkrecht zu einer jeweiligen Oberfläche eines Polygons eines polygonalen Netzes (14) erstreckt, das die Datenpunkte (7) miteinander verbindet,
- Minimieren sich schneidender Kanten eines polygonalen Netzes (14), das die Datenpunkte (7) miteinander verbindet,
- Minimieren einer Änderung von Oberflächenbereichen eines polygonalen Netzes (14), das die Datenpunkte (7) miteinander verbindet,
- Maximieren einer Bayes'schen Wahrscheinlichkeit.

2. Computerimplementiertes Verfahren nach Anspruch 1, wobei das vortrainierte maschinelle Lernmodell auf einem vortrainierten neuronalen Netzwerk basiert, insbesondere auf einem vortrainierten rekurrenten neuronalen Netzwerk.

3. Computerimplementiertes Verfahren nach Anspruch 1 oder 2, wobei der Schritt des Erzeugens einer Segmentierung einschließt
Vorverarbeiten der Mehrzahl von Datenpunkten (7) jeder 3D-Punktwolke (6) durch Projizieren der Mehrzahl von Datenpunkten (7) jeder 3D-Punktwolke (6) auf mindestens eine 2D-Ebene (11) und
Erzeugen der Segmentierung basierend auf einer jeweiligen resultierenden 2D-Projektion (12) der Mehrzahl von Datenpunkten (7) jeder 3D-Punktwolke (6),
wobei der Schritt des Zuweisens einer ersten Kennzeichnung (9) zu jedem Datenpunkt (7), der in dem ersten segmentierten Abschnitt (8) eingeschlossen ist, basierend auf den 2D-Projektionen (12) durchgeführt wird, und
wobei das Verfahren ferner den Schritt eines Rücktransformierens der 2D-Projektionen (12) zu den 3D-Punktwolken (6) einschließt, nachdem die Schritte des Erzeugens einer Segmentierung und des Zuweisens einer ersten Kennzeichnung (9) durchgeführt wurden.

4. Computerimplementiertes Verfahren nach Anspruch 3, wobei der Schritt des Vorverarbeitens der Mehrzahl von Datenpunkten (7) jeder 3D-Punktwolke (6) durch Projizieren der Mehrzahl von Datenpunkten (7) jeder 3D-Punktwolke (6) auf mindestens zwei unterschiedlichen 2D-Ebenen (11) erfolgt und wobei die Schritte des Erzeugens einer Segmentierung und des Zuweisens einer ersten Kennzeichnung basierend auf jeder der mindestens zwei unterschiedlichen 2D-Projektionen (12) durchgeführt werden.

5. Computerimplementiertes Verfahren nach Anspruch 3 oder 4, ferner einschließlich den Schritt des Erzeugens des vortrainierten maschinellen Lernmodells bevor es zum Erzeugen einer Segmentierung angewendet wird durch
- Bereitstellen eines Datensatzes (20), umfassend eine Vielzahl von gekennzeichneten 2D-Projektionen (12) von 3D-Punktwolken (6), die ein Fahrzeug (1) zu unterschiedlichen Zeitschritten während eines Crashtests des Fahrzeugs (1) zeigen, wobei jede gekennzeichnete 2D-Projektion eine Segmentierung von mindestens dem ersten Teil des Fahrzeugs (1) und mindestens die erste Kennzeichnung (9) einschließt, die den ersten Teil des Fahrzeugs (1) beschreibt,
- Aufteilen des Datensatzes (20) in Trainingsdaten (22) und Testdaten (24),
- Trainieren des maschinellen Lernmodells, um eine Segmentierung mindestens des ersten Teils des Fahrzeugs (1) zu erzeugen, der in jeder 2D-Projektion (12) gezeigt ist, und um mindestens die erste Kennzeichnung (9) zu dem segmentierten ersten Teil des Fahrzeugs (1) durch Nutzen der Trainingsdaten (22) zuzuweisen,
- Testen des maschinellen Lernmodells, um die Leistung des maschinellen Lernmodells durch Nutzen der Testdaten (24) zu bewerten und
- Ausgeben des getesteten maschinellen Lernmodells als das vortrainierte maschinelle Lernmodell.

6. Computerimplementiertes Verfahren nach Anspruch 1 oder 2, wobei der Schritt des Erzeugens einer Segmentierung der Mehrzahl von Datenpunkten (7) jeder 3D-Punktwolke (6) und der Schritt des Zuweisens einer ersten Kennzeichnung (9) zu jedem Datenpunkt (7), der in dem ersten segmentierten Abschnitt (8) eingeschlossen ist, beide in einem dreidimensionalen Raum durch direktes Nutzen der rekonstruierten 3D-Punktwolken (6) durchgeführt werden.

7. Computerimplementiertes Verfahren nach Anspruch 6, ferner einschließlich den Schritt des Erzeugens des vortrainierten maschinellen Lernmodells, bevor es zum Erzeugen einer Segmentierung angewendet wird, durch
- Bereitstellen eines Datensatzes (20), umfassend eine Vielzahl von gekennzeichneten 3D-Punktwolken (6), die ein Fahrzeug (1) zu unterschiedlichen Zeitschritten während eines Crashtests des Fahrzeugs (1) zeigen, wobei jede gekennzeichnete 3D-Punktwolke (6) eine Segmentierung von mindestens dem ersten Teil des Fahrzeugs (1) und mindestens die erste Kennzeichnung (9) einschließt, die den ersten Teil des Fahrzeugs (1) beschreibt,
- Aufteilen des Datensatzes (20) in Trainingsdaten (22) und Testdaten (24),
- Trainieren des maschinellen Lernmodells, um eine Segmentierung mindestens des ersten Teils des Fahrzeugs (1) zu erzeugen, der in jeder 3D-Punktwolke (6) gezeigt ist, und um mindestens die erste Kennzeichnung (9) zu dem segmentierten ersten Teil des Fahrzeugs (1) durch Nutzen der Trainingsdaten (22) zuzuweisen,
- Testen des maschinellen Lernmodells, um die Leistung des maschinellen Lernmodells durch Nutzen der Testdaten (24) zu bewerten und
- Ausgeben des getesteten maschinellen Lernmodells als das vortrainierte maschinelle Lernmodell.

8. Computerimplementiertes Verfahren nach einem der Ansprüche 1 bis 7, wobei der Schritt des Durchführens einer Verfolgung jedes Datenpunkts (7), der in dem ersten segmentierten Abschnitt (8) eingeschlossen ist, über die unterschiedlichen Zeitschritte (tᵢ) das Erzeugen einer polygonalen, insbesondere dreieckigen, Netz(14)-Darstellung jeder der 3D-Punktwolken (6) einschließt.

9. Computerimplementiertes Verfahren nach einem der Ansprüche 1 bis 8, wobei der Schritt des Analysierens der Positionen von verfolgten Datenpunkten (7), die in dem ersten segmentierten Abschnitt (8) über die unterschiedlichen Zeitschritte (tᵢ) eingeschlossen sind, ein Berechnen von Unterschieden in den Positionen der verfolgten Datenpunkte (7) über die unterschiedlichen Zeitschritte (tᵢ) zum Zugreifen auf die Dynamik der Datenpunkte (7) des ersten segmentierten Abschnitts (8) und das Berechnen vorbestimmter Parameter, insbesondere Leistungskennzahlen, einschließt.

10. Computerimplementiertes Verfahren nach einem der Ansprüche 1 bis 9, ferner umfassend den Schritt eines Nachbearbeitens der Mehrzahl von Datenpunkten (7) jeder 3D-Punktwolke vor dem Durchführen der Verfolgung jedes Datenpunkts (7), der in dem ersten segmentierten Abschnitt (8) eingeschlossen ist, und/oder den Schritt des Nachbearbeitens der empfangenen 2D-Bilder vor dem Erzeugen von 3D-Punktwolken (6), wobei das Nachbearbeiten ein Reduzieren von Rauschen der Mehrzahl von Datenpunkten (7) jeder 3D-Punktwolke (6) und/oder der aufgezeichneten 2D-Bilder und das Entfernen von Ausreißern aus der Mehrzahl von Datenpunkten (7) jeder 3D-Punktwolke (6) und/oder aus den aufgezeichneten 2D-Bildern einschließt.

11. Computerimplementiertes Verfahren nach einem der Ansprüche 1 bis 10, wobei die Segmentierung eine Anzahl von segmentierten Abschnitten (8) umfasst, die den ersten segmentierten Abschnitts (8) einschließen, wobei jeder der Anzahl von segmentierten Abschnitten einen unterschiedlichen Teil des Fahrzeugs (1) darstellt, wobei eine Kennzeichnung (9), die den jeweiligen Teil des Fahrzeugs (1) beschreibt, jedem Datenpunkt (7) zugewiesen ist, der in dem jeweiligen segmentierten Abschnitt (8) der Anzahl von segmentierten Abschnitten (8) eingeschlossen ist, und
wobei das Verfahren ferner den Schritt des Auswählens mindestens eines segmentierten Abschnitts (8) der Anzahl von segmentierten Abschnitten (8) und des Durchführens der Verfolgung jedes Datenpunkts (7) einschließt, der in diesem ausgewählten segmentierten Abschnitt (8) eingeschlossen ist, über die unterschiedlichen Zeitschritte (tᵢ).

12. Computerimplementiertes Verfahren nach einem der Ansprüche 1 bis 11, wobei der erste segmentierte Abschnitt (8) einen Airbag des Fahrzeugs (1) darstellt und die erste Kennzeichnung (9), die jedem Datenpunkt (7) des ersten segmentierten Abschnitts (8) zugeordnet ist, die Kennzeichnung "Airbag" ist.

13. Datenverarbeitungssystem, umfassend Mittel zum Vornehmen des Verfahrens nach einem der Ansprüche 1 bis 12.

14. Computerprogramm (30), umfassend Programmanweisungen, die, wenn das Programm durch einen Prozessor eines Datenverarbeitungssystems ausgeführt wird, den Prozessor veranlassen, die Schritte des computerimplementierten Verfahrens nach einem der Ansprüche 1 bis 12 vorzunehmen.

## Revendications

1. Procédé mis en œuvre par ordinateur permettant de traiter et d'analyser automatiquement des données d'essai de collision de véhicule (1) à l'aide d'un modèle d'apprentissage automatique, comprenant les étapes consistant à :
- recevoir une séquence d'images 2D (4) d'un véhicule (1) enregistrées par des caméras (3) sous différents angles et à différents intervalles de temps (tᵢ = t₁, ..., tₙ) entre un premier intervalle de temps (t₁) et un dernier intervalle de temps (tₙ) au cours d'un essai de collision de véhicule (1),
- reconstruire un nuage de points 3D (6) pour chacun des différents intervalles de temps (tᵢ) à partir de la séquence d'images 2D (4), dans lequel chaque nuage de points 3D (6) comprend une multitude de points de données (7),
- générer une segmentation de la multitude de points de données (7) de chaque nuage de points 3D (6) par application d'un modèle d'apprentissage automatique pré-entraîné, la segmentation comprenant au moins une première partie segmentée (8) représentant une première partie du véhicule (1),
- attribuer une première étiquette (9) à chaque point de données (7) inclus dans la première partie segmentée (8) par application du modèle d'apprentissage automatique pré-entraîné, dans lequel la première étiquette (9) décrit la première partie du véhicule (1),
- réaliser un suivi de chaque point de données (7) inclus dans la première partie segmentée (8) sur les différents intervalles de temps (tᵢ) en fonction des nuages de points 3D (6) reconstruits pour les différents intervalles de temps (tᵢ) par :
attribution d'un ID (10) à chaque point de données (7) inclus dans la première partie segmentée (8) du nuage de points 3D (6) reconstruit pour le dernier intervalle de temps (tₙ), et
suivi de chaque point de données (7) inclus dans la première partie segmentée (8) en fonction de son ID (10) attribué en remontant dans le temps à partir du dernier intervalle de temps (tₙ), et
- analyser des positions respectives des points de données (7) suivis inclus dans la première partie segmentée (8) sur les différents intervalles de temps (tᵢ)
**caractérisé en ce que**
l'étape consistant à réaliser un suivi de chaque point de données (7) inclus dans la première partie segmentée (8) sur les différents intervalles de temps (tᵢ) se produit sous au moins l'une parmi les hypothèses suivantes lorsqu'un intervalle de temps est comparé à son intervalle de temps précédent respectif :
- la réduction à un minimum d'un changement d'une distance respective entre deux points de données (7) différents,
- la réduction à un minimum d'un changement d'un axe s'étendant perpendiculairement à une surface respective d'un polygone d'un maillage polygonal (14) reliant les points de données (7) les uns aux autres,
- la réduction à un minimum des arêtes sécantes d'un maillage polygonal (14) reliant les points de données (7) les uns aux autres,
- la réduction à un minimum d'un changement des superficies d'un maillage polygonal (14) reliant les points de données (7) les uns aux autres,
- la maximisation de la probabilité bayésienne.

2. Procédé mis en œuvre par ordinateur selon la revendication 1, dans lequel le modèle d'apprentissage automatique pré-entraîné est basé sur un réseau neuronal pré-entraîné, en particulier sur un réseau neuronal récurrent pré-entraîné.

3. Procédé mis en œuvre par ordinateur selon la revendication 1 ou 2, dans lequel l'étape consistant à générer une segmentation comporte
le prétraitement de la multitude de points de données (7) de chaque nuage de points 3D (6) par projection de la multitude de points de données (7) de chaque nuage de points 3D (6) sur au moins un plan 2D (11), et
la génération de la segmentation en fonction d'une projection 2D (12) résultante respective de la multitude de points de données (7) de chaque nuage de points 3D (6),
dans lequel l'étape consistant à attribuer une première étiquette (9) à chaque point de données (7) inclus dans la première partie segmentée (8) est réalisée en fonction des projections 2D (12), et
dans lequel le procédé comporte en outre l'étape consistant à retransformer les projections 2D (12) en nuages de points 3D (6) après avoir réalisé les étapes de génération d'une segmentation et d'attribution d'une première étiquette (9).

4. Procédé mis en œuvre par ordinateur selon la revendication 3, dans lequel l'étape consistant à prétraiter la multitude de points de données (7) de chaque nuage de points 3D (6) se produit par projection de la multitude de points de données (7) de chaque nuage de points 3D (6) sur au moins deux plans 2D (11) différents et dans lequel les étapes consistant à générer une segmentation et à attribuer une première étiquette sont réalisées en fonction de chacune des au moins deux projections 2D (12) différentes.

5. Procédé mis en œuvre par ordinateur selon la revendication 3 ou 4, comportant en outre l'étape consistant à générer le modèle d'apprentissage automatique pré-entraîné avant de l'appliquer pour générer une segmentation par
- fourniture d'un ensemble de données (20) comprenant une pluralité de projections 2D (12) étiquetées de nuages de points 3D (6) montrant un véhicule (1) à différents intervalles de temps pendant un essai de collision de véhicule (1), dans lequel chaque projection 2D étiquetée comporte une segmentation d'au moins la première partie du véhicule (1) et au moins la première étiquette (9) décrivant la première partie du véhicule (1),
- division de l'ensemble de données (20) en données d'entraînement (22) et données d'essai (24),
- entraînement du modèle d'apprentissage automatique afin de générer une segmentation d'au moins la première partie du véhicule (1) montrée dans chaque projection 2D (12) et d'attribuer au moins la première étiquette (9) à la première partie segmentée du véhicule (1) en utilisant les données d'entraînement (22),
- test du modèle d'apprentissage automatique afin d'évaluer les performances du modèle d'apprentissage automatique en utilisant les données d'essai (24) ; et
- production en sortie du modèle d'apprentissage automatique testé en tant que modèle d'apprentissage automatique pré-entraîné.

6. Procédé mis en œuvre par ordinateur selon la revendication 1 ou 2, dans lequel l'étape consistant à générer une segmentation de la multitude de points de données (7) de chaque nuage de points 3D (6) et l'étape consistant à attribuer une première étiquette (9) à chaque point de données (7) inclus dans la première partie segmentée (8) sont toutes deux réalisées dans un espace tridimensionnel en utilisant directement chacun des nuages de points 3D (6) reconstruits.

7. Procédé mis en œuvre par ordinateur selon la revendication 6, comportant en outre l'étape consistant à générer le modèle d'apprentissage automatique pré-entraîné avant son application pour générer une segmentation par
- fourniture d'un ensemble de données (20) comprenant une pluralité de nuages de points 3D (6) étiquetés montrant un véhicule (1) à différents intervalles de temps pendant un essai de collision de véhicule (1), dans lequel chaque nuage de points 3D (6) étiqueté comporte une segmentation d'au moins la première partie du véhicule (1) et au moins la première étiquette (9) décrivant la première partie du véhicule (1),
- division de l'ensemble de données (20) en données d'entraînement (22) et données d'essai (24),
- entraînement du modèle d'apprentissage automatique afin de générer une segmentation d'au moins la première partie du véhicule (1) montrée dans chaque nuage de points 3D (6) et d'attribuer au moins la première étiquette (9) à la première partie segmentée du véhicule (1) en utilisant les données d'entraînement (22),
- test du modèle d'apprentissage automatique afin d'évaluer les performances du modèle d'apprentissage automatique en utilisant les données d'essai (24) ; et
- production en sortie du modèle d'apprentissage automatique testé en tant que modèle d'apprentissage automatique pré-entraîné.

8. Procédé mis en œuvre par ordinateur selon l'une des revendications 1 à 7, dans lequel l'étape consistant à réaliser un suivi de chaque point de données (7) inclus dans la première partie segmentée (8) sur les différents intervalles de temps (tᵢ) comporte la génération d'une représentation d'un maillage polygonal (14), en particulier triangulaire, de chacun des nuages de points 3D (6).

9. Procédé mis en œuvre par ordinateur selon l'une des revendications 1 à 8, dans lequel l'étape consistant à analyser les positions des points de données (7) suivis inclus dans la première partie segmentée (8) sur les différents intervalles de temps (tᵢ) comporte le calcul de différences dans les positions des points de données (7) suivis sur les différents intervalles de temps (tᵢ) pour accéder à la dynamique des points de données (7) de la première partie segmentée (8) et le calcul de paramètres prédéterminés, en particulier d'indicateurs clés de performance.

10. Procédé mis en œuvre par ordinateur selon l'une des revendications 1 à 9, comprenant en outre l'étape consistant à réaliser un post-traitement de la multitude de points de données (7) de chaque nuage de points 3D avant de réaliser le suivi de chaque point de données (7) inclus dans la première partie segmentée (8) et/ou l'étape consistant à réaliser un post-traitement des images 2D reçues avant de générer des nuages de points 3D (6), dans lequel le post-traitement comporte une réduction du bruit de la multitude de points de données (7) de chaque nuage de points 3D (6) et/ou des images 2D enregistrées, respectivement, et la suppression de valeurs aberrantes de la multitude de points de données (7) de chaque nuage de points 3D (6) et/ou des images 2D enregistrées, respectivement.

11. Procédé mis en œuvre par ordinateur selon l'une des revendications 1 à 10, dans lequel la segmentation comprend un certain nombre de parties segmentées (8) comportant la première partie segmentée (8), chacune du nombre de parties segmentées représentant une partie différente du véhicule (1), dans lequel une étiquette (9) décrivant la partie respective du véhicule (1) est attribuée à chaque point de données (7) inclus dans la partie segmentée respective (8) parmi le nombre de parties segmentées (8), et
dans lequel le procédé comporte en outre l'étape consistant à sélectionner au moins une partie segmentée (8) parmi le nombre de parties segmentées (8) et à réaliser le suivi de chaque point de données (7) inclus dans cette partie segmentée (8) sélectionnée sur les différents intervalles de temps (tᵢ).

12. Procédé mis en œuvre par ordinateur selon l'une des revendications 1 à 11, dans lequel la première partie segmentée (8) représente un sac gonflable du véhicule (1) et la première étiquette (9) attribuée à chaque point de données (7) de la première partie segmentée (8) est l'étiquette « sac gonflable ».

13. Système de traitement de données comprenant un moyen permettant d'effectuer le procédé selon l'une des revendications 1 à 12.

14. Programme informatique (30) comprenant des instructions de programme qui, lorsque le programme est exécuté par un processeur d'un système de traitement de données, amènent le processeur à effectuer les étapes du procédé mis en œuvre par ordinateur selon l'une des revendications 1 à 12.
